# EUROPÄISCHE PATENTANMELDUNG

(11) **EP 1 026 668 A1**
(43) Veröffentlichungstag der Anmeldung: **09.08.2000**
(21) Anmeldenummer: 00101411.7
(22) Anmeldetag: 25.01.2000
(51) Int. Cl.: G11B 7/00, G01N 21/88, G11B 7/26

(54) **Verfahren zum Prüfen von rotationssymmetrischen Gegenständen**

(30) Priorität: 04.02.1999 DE 19904427
(71) Anmelder: Basler Aktiengesellschaft, 22926 Ahrensburg (DE)
(72) Erfinder: Kaupp, Ansgar, Dr., 22926 Ahrensburg (DE)
(74) Vertreter: Jaeschke, Rainer, Dipl.-Ing.

(57) **Zusammenfassung**

Die Erfindung betrifft ein Verfahren zum Prüfen einer Vielzahl von zu einer Rotationsachse symmetrischen Gegenständen, wie beispielsweise von kreisrunden Scheiben, während oder nach dem Herstellungsprozeß. Insbesondere betrifft die Erfindung die optische Prüfung von kreisrunden Datenträgern, wie CD's, DVD's, CD-R's oder dergleichen. Gemäß der Erfindung wird vorgeschlagen, daß jeder Gegenstand wenigstens eine Markierung aufweist oder mit wenigstens einer Markierung versehen wird, durch die die Winkellage jedes Gegenstands um die Rotationsachse in bezug auf die Markierung für die Gegenstände desselben Herstellungsprozesses eindeutig bestimmbar ist, daß beim Prüfen zumindest ein Abschnitt der Gegenstände von wenigstens einem Abtastmittel abgetastet und die Markierung erfaßt wird, und daß das Abtast- und/oder Prüfergebnis von geometrischen Bereichen mit in bezug auf die Markierung übereinstimmenden Positionen auf den Gegenständen in gleicher Winkellage in bezug auf die Markierung erfaßt und/oder ausgewertet und/oder auf einem Anzeigemittel dargestellt wird. Ein immer an der gleichen Stelle auftretender Fehler wird demnach unabhängig von der Rotation des Prüflings bis zur Prüfstelle stets die gleichen geometrischen Daten haben und kann mit anderen Kriterien behandelt werden.

## Beschreibung

Die Erfindung betrifft ein Verfahren zum Prüfen einer Vielzahl von zu einer Rotationsachse symmetrischen Gegenständen, wie beispielsweise von kreisrunden Scheiben. Insbesondere betrifft die Erfindung die optische Prüfung von kreisrunden Datenträgern, wie CD's, DVD's, CD-R's oder dergleichen, so daß im folgenden überwiegend von einem dieser Datenträger die Rede ist, ohne daß damit eine Beschränkung verbunden sein soll.

Es ist bekannt, für optische Datenträger eine 100-% Prüfung während oder nach dem Herstellungsprozeß durchzuführen. Für CD's, CD-R's oder DVD's werden optische Prüfverfahren eingesetzt, bei welchen die Prüflinge um ihre Rotationsachse gedreht und abgetastet werden. Die zu prüfende Oberfläche, beispielsweise die Flachseite mit dem Datenbereich, wird erfaßt und auf eventuelle Fehler hin untersucht. Solche Prüfverfahren sind beispielsweise aus der DE 44 34 473 A1, DE 44 34 474 A1 und DE 44 34 475 A1 bekannt. Aus der WO 97/20312 ist es bekannt, einen kreisrunden Gegenstand stets in gleicher Winkellage zu einer auf dem Gegenstand vorhandenen Markierung zur Prüfung auszurichten und darzustellen.

Die Darstellung des geprüften Abschnitts des Prüflings erfolgt in der Regel auf einem Monitor einer Datenverarbeitungsanlage, in der die optische Abtastung ausgewertet wird. Die Darstellung kann in Form von Tabellen und Koordinatenangaben und/oder als bildliche Darstellung des Prüflings erfolgen, in der eventuelle Fehler gekennzeichnet oder sichtbar sind.

Die Prüfung der Gegenstände kann an einem beliebigen Abschnitt der Produktion hinter einem Produktionsschritt durchgeführt werden und erfolgt häufig zum Abschluß der Herstellung, also am Ende der Produktionslinie. Bis zur Prüfstation erfährt der Prüfling mehrere, nicht nachvollziehbare Drehungen um seine Rotationsachse, beispielsweise beim Lackieren, Handeln oder auch bei der Prüfung selbst. Dies hat den Nachteil, daß insbesondere in wesentlichen Herstellungsschritten erzeugte Fehler, die stets an der gleichen Stelle auftauchen, nicht immer als solche erkannt werden, da diese Fehler wegen der undefinierbaren Rotationen des Prüflings bis zur Prüfstelle zwar in gleichem radialen Abstand zur Rotationsachse, aber in unterschiedlichen Winkellagen auftauchen.

Bei der Herstellung einer CD, CD-R oder DVD ist der grundlegende Herstellungsschritt das Pressen des Rohlings in der Matrize. Durch einen Fehler in der Matrize kann die gesamte Produktion Ausschuß werden. Es ist daher wünschenswert, auch solche Systemfehler schnell erkennen zu können, um in den laufenden Produktionsprozeß entsprechend einzugreifen, den Fehler zu analysieren und gegebenenfalls die Matrize zu tauschen.

Der Erfindung liegt die Aufgabe zugrunde, ein Prüfverfahren der eingangs geschilderten Art so auszubilden, daß Fehler auch in bezug auf die Drehrichtung definiert erfaßt und entsprechend klassifiziert und entsprechend bearbeitet werden können.

Die Aufgabe wird gemäß der Erfindung dadurch gelöst, daß vorzugsweise jeder Gegenstand wenigstens eine Markierung aufweist oder mit wenigstens einer Markierung versehen wird, durch die die Winkellage jedes Gegenstands um die Rotationsachse in bezug auf die Markierung für die Gegenstände desselben Herstellungsprozesses eindeutig bestimmbar ist, daß beim Prüfen zumindest ein Abschnitt der Gegenstände von wenigstens einem Abtastmittel abgetastet und die Markierung erfaßt wird, und daß das Abtast- und/oder Prüfergebnis von geometrischen Bereichen mit in bezug auf die Markierung übereinstimmenden Positionen auf den Gegenständen in gleicher Winkellage in bezug auf die Markierung erfaßt und/oder ausgewertet und/oder auf einem Anzeigemittel dargestellt wird, und wobei Auswertemittel die Fehler der jeweiligen Gegenstände mit gleicher oder zumindest näherungsweise gleicher Position in bezug auf die Winkellage zur Markierung und mit gleichem radialen Abstand zur Rotationsachse mit anderen Kriterien auswerten als stochastisch auftretende Fehler. Ein immer an der gleichen Stelle auftretender Fehler wird demnach unabhängig von der Rotation des Prüflings bis zur Prüfstelle stets die gleichen geometrischen Daten haben. Es ist offensichtlich, daß hierdurch eventuelle Systemfehler, insbesondere Fehler in der Matrize, erkannt und klassifiziert werden können. Mit der drehrichtungsorientierten Erfassung, Auswertung und/oder Darstellung eines ansonsten rotationssymmetrischen Gegenstandes ist es möglich, solche ständig auftretenden Fehler schnell und zuverlässig als Matrizenfehler, sogenannte Stamperfehler, zu klassifizieren. Dementsprechend kann auch die Fehlerbehandlung, nämlich ob ein solcher Fehler Auschluß bildet oder nicht, entprechnd optimiert werden.

Grundsätzlich ist es zweckmäßig, die Prüfung in einem laufenden Produktionsprozeß durchzuführen. Der laufende Produktionsprozeß kann dann bei einem detektierten Systemfehler gegebenenfalls angehalten werden.

Die Prüfung kann auch batchweise für eine vorbestimmte Anzahl von Gegenständen erfolgen. Als Markierung kann dann beispielsweise ein Teil des oder der nicht rotationssymmetrische Aufdruck verwendet werden. Dieser kann für die drehrichtungsorientierte Ausrichtung erfaßt werden, so daß die Prüfung der Gegenstände, insbesondere des Aufdruckes, erleichtert wird.

Es ist zweckmäßig, wenn die Markierung auf dem Anzeigemittel stets die gleiche Position besitzt, um die Gegenstände stets in gleicher Ausrichtung darzustellen. Dies hat den Vorteil, daß das Erkennen eines immer an der gleichen Stelle des Gegenstandes auftretenden Fehlers wesentlich erleichtert wird. Auch ist es möglich, daß bei der Erfassung, Auswertung und/oder Darstellung eines geometrischen Punktes oder Bereiches des Gegenstandes mittels Koordinaten, insbesondere mittels Polarkoordinaten oder kartesischen Koordinaten, die Markierung einen fixen Bezugspunkt der Koordinaten bildet. Dies kann durch eine entsprechende und leicht durchzuführende Koordinatentransformation erfolgen. Durch diese Maßnahmen wird bewirkt, daß jede Position in bezug auf die Markierung und somit auch ein identischer Fehler auf jedem Prüfling die gleichen Koordinaten besitzt, so daß ein solcher Fehler schnell erkannt und als Systemfehler klassifiziert werden kann.

Grundsätzlich ist es dabei zweckmäßig, wenn Detektionsmittel vorhanden sind, die Fehler der jeweiligen Gegenstände mit gleicher Position in bezug auf die Winkellage zur Markierung und mit gleichem radialen Abstand zur Rotationsachse erfassen, gegebenenfalls in einem Speicher speichern und mit eine Zähleinrichtung zählen, wobei bei dem Überschreiten einer vorbestimmbaren Anzahl von gleichen Fehlern mit gleicher oder zumindest näherungsweise gleicher Position auf den Gegenständen ein Signal, beispielsweise eine besondere Anzeige, erfolgt. Damit kann eine automatische Erfassung, Klassifizierung und Anzeige eines Systemfehlers erfolgen. Dies insbesondere dann, wenn die Gleichartigkeit der Fehler geprüft und erkannt wird. Es kann auch vorgesehen werden, daß beim Erfassen und Erkennen eines stets zum Ausschuß führenden Systemfehlers das Signal ein Anhalten der Produktionslinie bewirkt.

Im einzelnen kann dabei so vorgegangen werden, daß die Fehlstellen mit den Positionsangaben und den Fehlerdaten zumindest einer vorbestimmten Anzahl bereits geprüfter Gegenstände gespeichert werden. Der Speicher kann als Schieberegister oder Ringspeicher ausgelegt sein, in dem die Werte des ältesten getesteten Datenträgers durch die Werte des zuletzt geprüften Datenträgers ersetzt werden. Die Anzahl kann beispielsweise 100, 200 oder mehr betragen. Mit der oben erläuterten Fehlererkennung einschließlich deren Positionsangabe kann ein Signal, also in der Regel ein Fehlersignal oder ein besonderes Alarmsignal als Hinweis auf einen Systemfehler, dann erzeugt werden, wenn eine vorbestimmte Anzahl, beispielsweise 10 oder 20, von aufeinanderfolgenden Datenträgern ähnliche oder übereinstimmende Fehler an übereinstimmenden Positionen aufweist. Die fehlerhaften Datenträger müssen nicht unmittelbar aufeinanderfolgend sein. Auch kann ein Signal erzeugt werden, wenn ein vorbestimmter Teil der zuletzt geprüften Datenträger ähnliche oder gleichartige Fehler an übereinstimmenden Positionen aufweist. Dabei kann die Zahl der hierfür maßgeblichen geprüften Datenträger kleiner als die Anzahl derjenigen Datenträger sein, deren Daten im Speicher vorhanden sind. Grundsätzlich kann aber auch die gesamte Anzahl als Bemessungsgrundlage herangezogen werden. Letztlich ist es dann möglich, bei einem detektierten möglichen Systemfehler alle gespeicherten Werte der vorher geprüften Datenträger nach genau diesem Fehler zu untersuchen.

Insbesondere kann vorgesehen werden, daß beim Auftreten von Fehlstellen immer an der gleichen Position der jeweiligen Gegenstände, die im Einzelfall grundsätzlich keinen Ausschuß bewirken, dennoch eine entsprechendes Signal, beispielsweise eine Anzeige erfolgt, um auf die Gefahr eines Systemfehlers, insbesondere eines Fehlers in der Matrize hinzuweisen. Dies ermöglicht eine genauere Prüfung der Gegenstände während des laufenden Produktionsprozesses auf eventuelle Systemfehler, so daß frühzeitig entsprechende Eingriffe in die Produktionslinie getätigt werden können.

Gemäß einer weiteren möglichen Ausführungsform der Erfindung ist vorgesehen, daß Detektionsmittel vorhanden sind, die ein Auftreten von Fehlstellen immer an der gleichen Position der jeweiligen Gegenstände erfassen, wobei diese Position als fehlerfrei deklarierbar ist, so daß erfaßte aber unschädliche Systemfehler nicht zu einem Ausschuß führen. Es kann hierbei zweckmäßig sein, diese erfaßten und zunächst als fehlerfrei deklarierten Positionen stets weiter zu überwachen, um bei einer Veränderung der Fehlstelle, beispielsweise eine Veränderung der Größe, wieder ein entsprechende Fehlersignal zu erzeugen. Diese als fehlerfrei deklarierte Positionen sind sowohl in Drehrichtung als auch in radialer Richtung begrenzt, so daß beispielsweise Fehler auf demselben Radius einer anderen Winkellage nach wie vor erfaßt werden können. Die Zuverlässigkeit der Prüfung wird somit erhöht.

Die Anordnung der Markierung im einzelnen ist grundsätzlich beliebig, solange durch diese eine eindeutige Winkellage definierbar ist. Es ist bei einem Datenträger zweckmäßig, wenn die Markierung außerhalb des Datenbereiches angeordnet ist. So kann bei einer kreisrunden Scheibe die Markierung am äußeren Rand und bei einer kreisrunden Scheibe mit Mittenloch, wie einer CD, DVD, CD-R, die Markierung am äußeren Rand und/oder innerem Rand aufgebracht sein.

Weiterhin ist die Form und die Anzahl der Markierungen beliebig, solange eine eindeutige Bestimmung der Winkellage möglich ist. Grundsätzlich kann die Markierung als ein Strich ausgebildet sein, der sich in radialer Richtung zumindest teilweise über die Scheibe erstreckt. Gemäß einer bevorzugten Ausführungsform ist vorgesehen, daß bei einem codierten Datenträger, wie einer CD, DVD, CD-R, die Markierung Bestandteil des ID-Codes oder der ID-Code selbst ist. Hier wird in vorteilhafter Weise ausgenutzt, daß dieser ID-Code beispielsweise auf einer CD stets vorhanden ist. Es braucht somit keine separate Markierung aufgebracht zu werden. Der besondere Vorteil ist jedoch darin zu sehen, daß der ID-Code beim Pressen des Rohlings durch die Matrize aufgebracht wird, so daß hierdurch der Rohling stets in eindeutiger Winkellage in bezug auf die Matrize erfaßbar ist. Ein eventueller Fehler der Matrize kann somit schnell und zuverlässig erkannt und als Systemfehler klassifiziert werden.

Grundsätzlich kann aber auch vorgesehen werden, daß bei der Herstellung einer CD, DVD, CD-R oder eines anderen ähnlich aufgebauten Datenträgers eine weitere Markierung durch den Preßvorgang des Rohlings in der Matrize aufgebracht wird. Dies hat den Vorteil, daß gegebenenfalls eine Erfassung der nunmehr genau definierten Markierung leichter erfolgen kann.

Es kann aber auch vorgesehen werden, daß bei der Herstellung einer CD, DVD, CD-R oder eines ähnlich aufgebauten Datenträgers die Markierung nach dem Preßvorgang des Rohlings aufgebracht wird derart, daß die Winkellage des Rohlings in Bezug auf dessen Winkellage in der Matrize eindeutig definierbar ist. Dabei ist es vorteilhaft, wenn die Markierung entfernbar auf dem Gegenstand aufgebracht wird.

Es ist offensichtlich, daß es durch das Verfahren gemäß der Erfindung möglich ist, eventuelle Systemfehler leicht zu erkennen. Insbesondere ist es bei der Herstellung von gepreßten Gegenständen möglich, Defekte in der Preßmatrize zu erfassen, da ein solcher Defekt stets den gleichen Fehler an einer identischen Position bewirkt. Ohne eine Markierung und deren Erfassung ist es nicht möglich, die Prüfling stets in übereinstimmender Winkellage zu erfassen und darzustellen, um identische Fehler auch gleichartig und/oder mit gleichen Koordinaten oder entsprechenden Daten auszuwerten. Durch die Erfindung kann eine Auswertung und eine Darstellung stets in gleicher Winkellage in bezug auf eine Ausgangslage erfolgen. Das Prüfergebnis kann somit noch aussagekräftiger werden. Insbesondere können bei der Herstellung von optischen Datenträger auch solche Fehler in der Matrize erkannt werden, die im Einzelfall noch keinen Ausschuß bewirken würden. Hier kann die Sensibilität des Prüfverfahrens bei Auftreten von solchen Fehlern immer an der identischen Position erhöht werden, so daß rechtzeitig in den Produktionsprozeß eingegriffen werden kann.

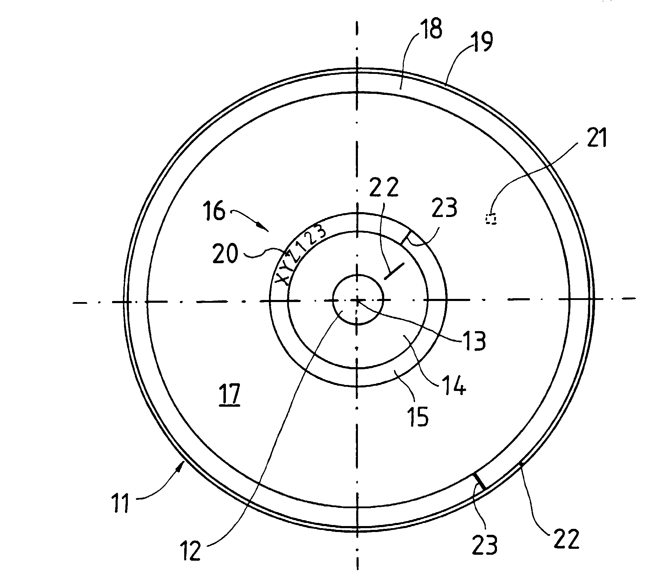

Die Erfindung wird im folgenden anhand der schematischen Zeichnung erläutert, deren einzige Figur eine Draufsicht auf eine CD zeigt.

Die in der Zeichnung dargestellte Compact-Disc (CD) 11 ist in üblicherweise als kreisrunde Scheibe mit Mittenloch 12 ausgebildet. Die CD ist somit vollkommen symmetrisch zur Rotationsachse 13. An das Mittenloch 12 grenzt in der Regel ein innerer koaxialer Randbereich 14 zum Verspannen der CD in der Abspielvorrichtung an. An diesen schließt sich ein koaxialer Bereich 15 an, auf dem der Identifizierungscode, der ID-Code 16, aufgebracht ist. Dieser koaxiale Bereich 15 wird vom eigentlichen Datenbereich 17 umgeben. Hieran kann sich je nach Datenmenge ein Lead-Out 18 oder aber unmittelbar der äußere Randbereich 19 anschließen.

Es ist offensichtlich, daß eine solche CD, insbesondere der Datenbereich 17, für ein optisches Abtastmittel einer Prüfvorrichtung ohne weitere Maßnahmen unabhängig von der Rotation stets gleich aussieht. Aus diesem Grund können grundsätzlich solche Fehler, die beispielsweise wegen einer defekten Matrize während des Preßvorganges stets an derselben Position in bezug auf den radialen Abstand und der Winkellage auftreten, nicht entsprechend erkannt und als solche klassifiziert werden.

Eine Orientierung der CD in Drehrichtung kann nur durch Markierungen erfolgen, die in Drehrichtung nicht symmetrisch sind. So ist der ID-Code 16 als Zahlen-Ziffern-Kombination in Drehrichtung nicht symmetrisch. Der ID-Code kann auch einen Barcode oder eine andere bildliche Codierung aufweisen, die ebenfalls nicht kreissymmetrisch ist. Es kann daher vorgesehen werden, ein beliebiges Symbol 20 oder aber auch den Anfang oder Ende des ID-Codes als Markierung auszuwählen. Anhand der Markierung kann dann ein bestimmter geometrischer Bereich 21 stets in eindeutiger Winkellage um die Rotationsachse 13 zur Markierung sowie entsprechendem Abstand zur Rotationsachse angegeben werden.

Hierdurch ist es möglich, daß bei allen Gegenstände, die in einer Produktionslinie hergestellt werden, identische Bereiche bei der Prüfung auch mit identischen Daten, insbesondere Koordinaten, erfaßt und ausgewertet werden. Durch die zumindest rechnerische gleiche Ausrichtung in bezug auf die originäre Ausrichtung in der Matrize lassen sich Schlüsse auf eventuelle Fehler ziehen, die bereits beim Preßvorgang durch eine defekte Matrize erzeugt worden sind.

Grundsätzlich ist es möglich auch andere oder zusätzliche Markierungen vorzusehen. So kann eine Markierung als Strich 22 ausgebildet sein, der am inneren Randbereich 14 oder äußeren Randbereich 19 angeordnet ist. Die Markierung kann aber auch durch abgegrenzte Flächenabschnitte gebildet werden. Wesentlich für die Ausbildung und Anordnung der Markierung ist, daß diese nicht vollständig rotationssysmetrisch sind und somit in Drehrichtung eine definierte Positionierung des ansonsten vollkommen symmetrischen Gegenstandes erlauben. Auch können separate Markierungen 23 im Lead-Out 18 oder im koaxialen Bereich 15 des ID-Codes 16 vorhanden sein. Solche Markierungen können bereits durch die Matrize erzeugt werden, so daß eine eindeutige Zuordnung und Ausrichtung der CD möglich ist.

Insbesondere erlaubt ein solches Verfahren ein Erkennen und Klassifizieren von Matrizenfehlern. Es ist hierbei möglich, die Prüfung so durchzuführen, daß erfaßte Matrizenfehler, die noch nicht zu einem Ausschuß führen, akzeptiert werden. Diese noch nicht schädlichen Fehler können entsprechend überwacht werden. Auch ist es möglich, diese Fehlerunterdrückung dann wieder rückgängig zu machen, wenn sich herausstellt, daß der Fehler nur temporär, beispielsweise durch eine leichte Verschmutzung der Matrize, vorhanden war und bei den folgenden Datenträgern nicht mehr zu erfassen ist. Die Prüfung und Inspektion der Datenträger kann somit weiter verfeinert werden.

Insbesondere ist dies auf eine punktgenaue Position bezogen, so daß weiterhin andere Fehler, die beispielsweise auf demselben Radius liegen, nach wie vor erfaßt werden können. Auch ist es möglich, Matrizenfehler bereits frühzeitig zu erkennen, so daß eine Matrize frühzeitig gewechselt werden kann, ohne daß durch diese Ausschuß erzeugt worden ist.

## Patentansprüche

1. Verfahren zum optischen Prüfen einer Vielzahl von zu einer Rotationsachse symmetrischen Gegenständen, insbesondere von kreisrunden Datenträgern, während oder nach dem Herstellungsprozeß, wobei wenigstens ein Teil oder jeder der Gegenstände wenigstens eine Markierung (16, 20, 22, 23) aufweist oder mit wenigstens einer Markierung versehen wird, durch die die Winkellage jedes Gegenstands um die Rotationsachse (13) in bezug auf die Markierung für die Gegenstände desselben Herstellungsprozesses eindeutig bestimmbar ist, und beim Prüfen zumindest ein Abschnitt der Gegenstände von wenigstens einem Abtastmittel abgetastet und die Markierung erfaßt wird, und daß das Abtast- und/oder Prüfergebnis von geometrischen Bereichen (21) mit in bezug auf die Markierung übereinstimmenden Positionen auf den Gegenständen in gleicher Winkellage in bezug auf die Markierung erfaßt und/oder ausgewertet und/oder auf einem Anzeigemittel dargestellt wird, und wobei Auswertemittel die Fehler der jeweiligen Gegenstände mit gleicher oder zumindest näherungsweise gleicher Position in bezug auf die Winkellage zur Markierung und mit gleichem radialen Abstand zur Rotationsachse mit anderen Kriterien auswerten als stochastisch auftretende Fehler.

2. Verfahren nach Anspruch 1, dadurch gekennzeichnet, daß die Auswertemittel ein Auftreten von Fehlstellen immer an der gleichen oder zumindest näherungsweise gleichen Position auf den jeweiligen Gegenständen zählen, und daß bei Überschreiten einer vorbestimmbaren Anzahl von gleichen Fehlern mit gleicher oder zumindest näherungsweise gleicher Position auf den jeweiligen Gegenständen ein Signal erfolgt.

3. Verfahren nach Anspruch 1, dadurch gekennzeichnet, daß die Auswertemittel ein Auftreten von Fehlstellen immer an der gleichen oder zumindest näherungsweise gleichen Position auf den jeweiligen Gegenständen erkennen und ein entsprechendes Signal bewirken, auch wenn im Einzelfall eine solche Fehlstelle keinen Ausschuß des geprüften Gegenstandes bewirkt.

4. Verfahren nach Anspruch 1, dadurch gekennzeichnet, daß die Auswertemittel ein Auftreten von Fehlstellen immer an der gleichen oder zumindest näherungsweise gleichen Position auf den jeweiligen Gegenständen erkennen, und daß diese Positionen als fehlerfrei deklarierbar sind, so daß erfaßte aber unschädliche Systemfehler nicht zu einem Ausschuß führen.

5. Verfahren nach Anspruch 4, dadurch gekennzeichnet, daß die als fehlerfrei deklarierten Bereiche überwacht werden, und daß bei Veränderung der Fehlstellen, insbesondere deren Größe, ein Signal erzeugt wird.

6. Verfahren nach einem der Ansprüche 1 bis 5, dadurch gekennzeichnet, daß die Markierung auf dem Anzeigemittel stets die gleiche Position besitzt, um die Gegenstände stets in gleicher Ausrichtung darzustellen.

7. Verfahren nach einem der Ansprüche 1 bis 6, dadurch gekennzeichnet, daß bei einem codierten Datenträger die Markierung Bestandteil (20) des ID-Codes oder der ID-Code (16) ist.

8. Verfahren nach einem der Ansprüche 1 bis 7, dadurch gekennzeichnet, daß bei einem durch Pressen hergestellten kreisrunden Datenträger die Markierung (22, 23) nach dem Preßvorgang des Rohlings derart aufgebracht wird, daß die Winkellage des Rohlings in Bezug auf dessen Winkellage in der Matrize eindeutig definierbar ist.

9. Verfahren nach einem der Ansprüche 1 bis 8, dadurch gekennzeichnet, daß die Markierung (22, 23) entfernbar auf dem Gegenstand aufgebracht wird.

10. Vorrichtung zum optischen Prüfen einer Vielzahl von zu einer Rotationsachse symmetrischen Gegenständen, insbesondere von kreisrunden Datenträgern, während oder nach dem Herstellungsprozeß,
mit wenigstens einer optischen Abtasteinrichtung, die zumindest eine Markierung (16, 20, 22, 23) zumindest eines Teils der Gegenstände erfaßt, durch die die Winkellage jedes Gegenstands um die Rotationsachse (13) in bezug auf die Markierung für die Gegenstände desselben Herstellungsprozesses eindeutig bestimmbar ist,
und mit einer Prüfeinheit, die das Abtast- und/oder Prüfergebnis von geometrischen Bereichen (21) mit in bezug auf die Markierung übereinstimmenden Positionen auf den Gegenständen in gleicher Winkellage in bezug auf die Markierung erfaßt und/oder ausgewertet und/oder auf einem Anzeigemittel darstellt,
und mit wenigstens einem Speicher zum Speichern zumindest der Fehlstellen einschließlich deren eindeutigen Positionsangaben von einer vorbestimmbaren Anzahl von aufeinanderfolgenden geprüften Gegenständen,
sowie mit wenigstens einem Auswertemittel, durch die Fehlstellen der jeweiligen Gegenstände mit gleicher oder zumindest näherungsweise gleicher Position in bezug auf die Winkellage zur Markierung und mit gleichem radialen Abstand zur Rotationsachse mit anderen Kriterien ausgewertet werden als stochastisch auftretende Fehler.
